# EUROPEAN PATENT APPLICATION

(11) **EP 3 467 259 A1**
(43) Date of publication of application: **10.04.2019**
(21) Application number: 18198160.6
(22) Date of filing: 02.10.2018
(51) Int. Cl.: F01D 5/14, F01D 5/20, F01D 9/02, F01D 9/04

(54) **TURBINE ENGINE WITH STRUTS**

(30) Priority: 05.10.2017 US 201715725327
(71) Applicant: General Electric Company, Schenectady, NY 12345 (US)
(72) Inventor: BOWDEN, William Joseph, Schenectady, NY 12345 (US); PARKER, David Vickery, Schenectady, NY 12345 (US); WOTZAK, Mark Gregory, Schenectady, NY 12345 (US); CEDAR, Richard David, Schenectady, NY 12345 (US)
(74) Representative: Williams, Andrew Richard

(57) **Abstract**

An apparatus and method relating to a turbine engine 10 with an annular frame (56) about a centerline defining an axial direction, the annular frame 56 formed from an inner frame wall 62 and an outer frame wall 64 disposed around and radially spaced from the inner frame wall 62 to define an annular airflow passage 66 between the inner and outer frame walls 64. The annular frame 56 further includes at least two struts 60, 60a, 60b, 60c, 90, 92, 94, 96 each extending between a root 70 at the inner frame wall 62 and a tip 72 at the outer frame wall 64 to define a span-wise direction.

## Description

### BACKGROUND

Turbine engines, and particularly gas or combustion turbine engines, are rotary engines that extract energy from a flow of combusted gases passing through the engine onto a multitude of rotating turbine blades.

Annular frames within a turbine engine can include an annular inner casing and an annular outer casing defining an annular airflow passage through which at least gasses can flow prior to becoming combusted or after becoming combusted. A plurality of struts can be arranged therebetween to carry loads between the inner and outer casing during operation. The struts can also serve as a housing for service lines or pipes running between the inner and outer casing. The struts are located within the airflow passage and can therefore have airfoil shapes around which the air can flow efficiently.

### BRIEF DESCRIPTION

In one aspect the disclosure relates to a component for a turbine engine, a turbine engine with an annular frame about a centerline defining an axial direction, the annular frame comprising an inner frame wall, an outer frame wall disposed around and radially spaced from the inner frame wall to define an annular airflow passage between the inner and outer frame walls, at least two struts each extending between a root at the inner frame wall and a tip at the outer frame wall to define a span-wise direction and having different airfoil shapes, the airfoil shapes differing from each other in at least one of a twist along the span-wise direction, a chord length along the axial direction, or a camber.

In another aspect the disclosure relates to a component for a turbine engine, a turbine engine with an annular duct housing about a centerline defining an axial direction comprising an inner frame wall, an outer frame wall disposed around and radially spaced from the inner frame wall to define an annular airflow passage in an axial direction between the inner and outer frame walls, and at least two struts each extending between a root at the inner frame wall and a tip at the outer frame wall to define a span-wise direction and having airfoil shapes, the at least two struts arranged in at least one of an axially staggered pattern or a circumferentially variably spaced pattern.

In yet another aspect, the disclosure relates to a method of controlling a pressure field entering a compressor section of a turbine engine, the method comprising passing air through an annular frame extending from an inlet to an outlet and defining an airflow passage, turning the air along at least one strut located within the airflow passage and having an airfoil shape, and controlling a wake of air proximate the outlet by at least one of the following: varying the chord length of the at least one strut with respect to a second strut, or varying the camber of the at least one strut with respect to a second strut.

### BRIEF DESCRIPTION OF THE DRAWINGS

In the drawings:
FIG. 1 is a schematic cross-sectional diagram of a turbine engine for an aircraft with an annular frame.
FIG. 2 is an isometric view of the annular frame for the turbine engine of FIG. 1 with struts extending between an inner frame wall and an outer frame wall.
FIG. 3 is an isometric view of the inner frame wall of FIG. 2 with at least two struts according to an aspect of the disclosure discussed herein.
FIG. 4 is an unwrapped view of the inner frame with a plurality of struts with airfoil cross-sectional areas having varying chord lengths according to another aspect of the disclosure discussed herein.
FIG. 5 is an unwrapped view of the inner frame with a plurality of struts with airfoil cross-sectional areas having varying camber according to another aspect of the disclosure discussed herein.
FIG. 6 is an unwrapped view of the inner frame with a plurality of struts with airfoil cross-sectional areas having varying camber and chord lengths according to yet another aspect of the disclosure discussed herein.
FIG. 7 is an unwrapped view of the inner frame with a plurality of struts with airfoil cross-sectional areas arranged circumferentially with variable spacing according to another aspect of the disclosure discussed herein.
FIG. 8 is an unwrapped view of the inner frame with a plurality of struts with airfoil cross-sectional areas staggered axially according to yet another aspect of the disclosure discussed herein.
FIG. 9A is a pressure field for air passing through the annular frame as seen along line IX-IX of FIG. 2 according to aspects of the disclosure discussed herein.
FIG. 9B is a pressure field for air passing through an annular frame as seen along line IX-IX of FIG. 2 without aspects of the disclosure discussed herein.

### DETAILED DESCRIPTION

Aspects of the disclosure described herein are directed to the shape and arrangement of struts in an annular frame of a turbine engine. For purposes of illustration, the aspects of the disclosure discussed herein will be described with respect to an annular frame in a turboprop turbine engine. It will be understood, however, that aspects of the disclosure described herein are not so limited and that an annular frame as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline. Additionally, "downstream" and "upstream" can be used in a more local context, where "upstream" refers to a positional that is closer to an inlet of a particular flow passage or flow stream not necessarily in aligned with the engine centerline. Additionally, as used herein, the terms "radial" or "radially" refer to a dimension extending between a center longitudinal axis of the engine and an outer engine circumference. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

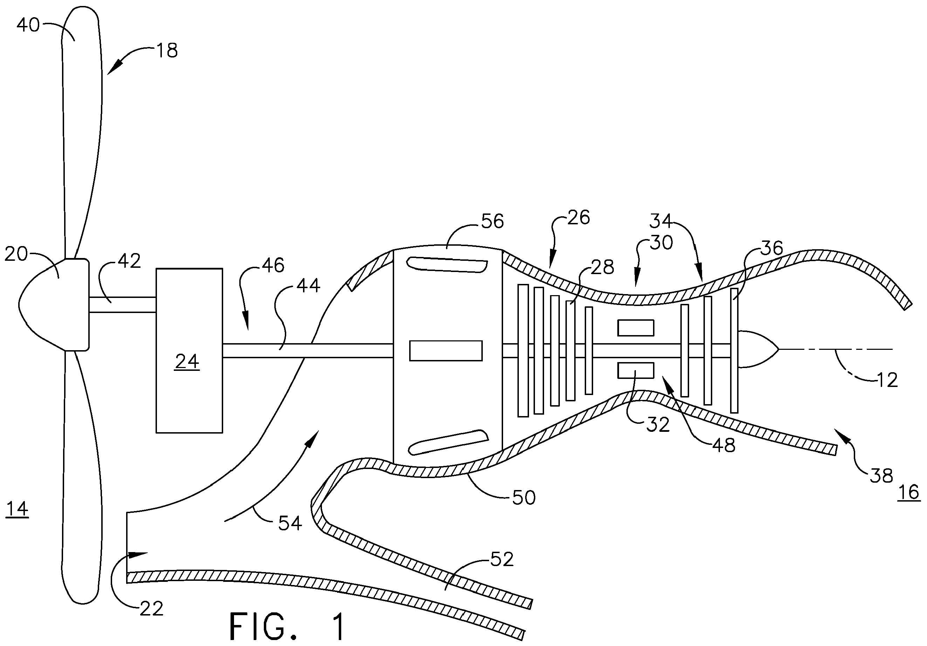

Referring to FIG. 1, an engine 10 has a generally longitudinally extending axis or centerline 12 extending forward 14 to aft 16. The engine 10 includes, in downstream serial flow relationship, a propeller section 18 including a spinner 20, an inlet 22, a gearbox 24, a compressor section 26 including a compressor 28, a combustion section 30 including a combustor 32, a turbine section 34 including a turbine 36, and an exhaust section 38.

The spinner 20 includes a plurality of propeller blades 40 disposed radially about a propeller shaft 42 extending from the gearbox 24. A drive shaft 44 extends from the gearbox 24 and is disposed coaxially about the centerline 12 of the engine 10 and drivingly connects the turbine 36 to the compressor 28. The propeller shaft 42 and drive shaft 44 are rotatable about the centerline 12 and couple to a plurality of rotatable elements, which can collectively define a rotor 46.

The compressor 28, the combustor 32, and the turbine 36 form a core 48 of the engine 10, which generates combustion gases. The core 48 is surrounded by a core casing 50, which can be coupled with the inlet 22. A foreign object duct 52 can be further coupled to the casing 50 and in fluid communication with the inlet 22.

In operation, an airflow 54 exits the propeller section 18 and is channeled into the compressor 28 through an annular frame, by way of non-limiting example a compressor frame 56, provided about the centerline 12, which then supplies pressurized air to the combustion section 30. The pressurized air from the compressor 28 mixes with fuel in the combustor 32 where the fuel combusts, thereby generating combustion gases. The turbine 36 extracts some work from these gases, which drives the compressor 28. The turbine 36 discharges the combustion gases, and the exhaust gas is ultimately discharged from the engine 10 via the exhaust section 38. The driving of the turbine 36 drives the drive shaft 44 to rotate the spinner 20 via the gearbox 24 and propeller shaft 42.

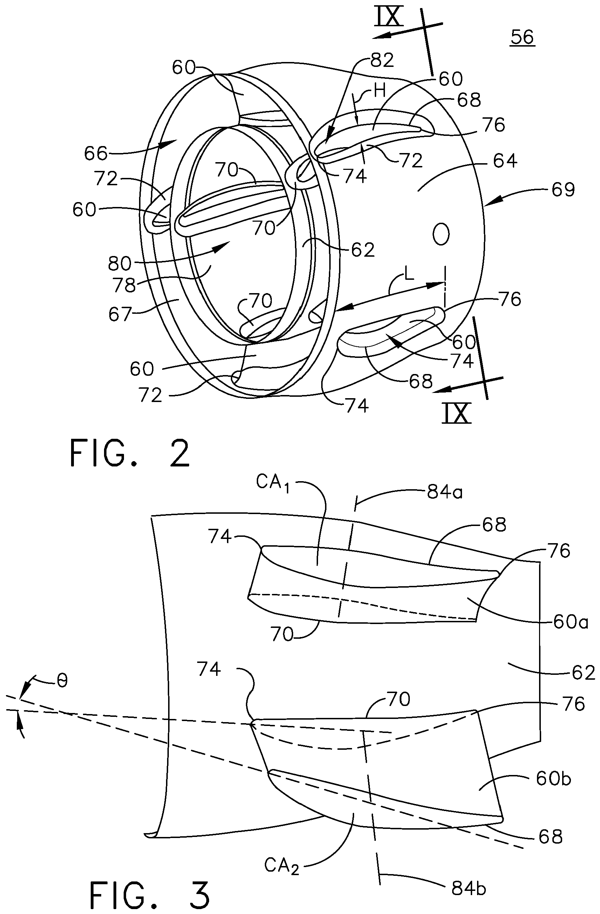

FIG. 2 is an isometric view of the compressor frame 56. At least two struts 60, illustrated as a plurality of struts 60, is circumferentially arranged within the compressor frame 56. The plurality of struts 60, which can be at least two struts or three or more struts, extends between an inner frame wall 62 and an outer frame wall 64 to define an annular airflow passage 66 therebetween. The airflow passage 66 extends from an inlet 67 to an outlet 69 defined by the inner and outer frame walls 62, 64.

Each strut 60 extends from a root 70 at the inner frame wall 62 to a tip 72 at the outer frame wall 64 to define a span-wise direction. The struts 60 are located within the airflow passage 66 and have airfoil shapes 68 extending axially from a leading edge 74 to a trailing edge 76. The airfoil shape 68 can be further defined in terms of a chord length (L) extending in an axial direction with respect to the compressor frame 56 and an airfoil height (H) extending in a circumferential direction with respect to the compressor frame 56.

A duct 78 having an interior 80 defined by the inner frame wall 62 is in communication with a strut interior 82 of at least one of the plurality of struts 60. While illustrated as having five struts 60, it should be understood that the amount of struts can be two or more and that the number of struts shown is for illustrative purposes only and not meant to be limiting.

The strut interior 82 can provide a housing for service lines or pipes running between the inner and outer frame walls 62, 64 and through the duct 78. The plurality of struts 60 can also carry loads between the inner and outer frame walls 62, 64 during operation. The airfoil shape 68 of the struts 60 enable air to flow efficiently through the airflow passage 66.

Turning to FIG. 3, an enlarged schematic view of two of the struts 60 extending from the inner frame wall 62 is illustrated according to an aspect of the disclosure described herein. The outer frame wall 64 has been removed for clarity. A first strut 60a extends radially outward from the inner frame wall 62 along a first radial axis 84a. The airfoil shape 68 defines an airfoil cross-sectional area (CA1) that is oriented in substantially the same position along any point on the radial axis 84a. A second strut 60b, extends along a second radial axis 84b such that the orientation of an airfoil cross-sectional area (CA2) twists about the radial axis 84b through some angle θ. The degree of rotation through which the second strut 60b is turned is dependent upon the orientation of the annular frame with respect to the airflow 54 (FIG. 1).

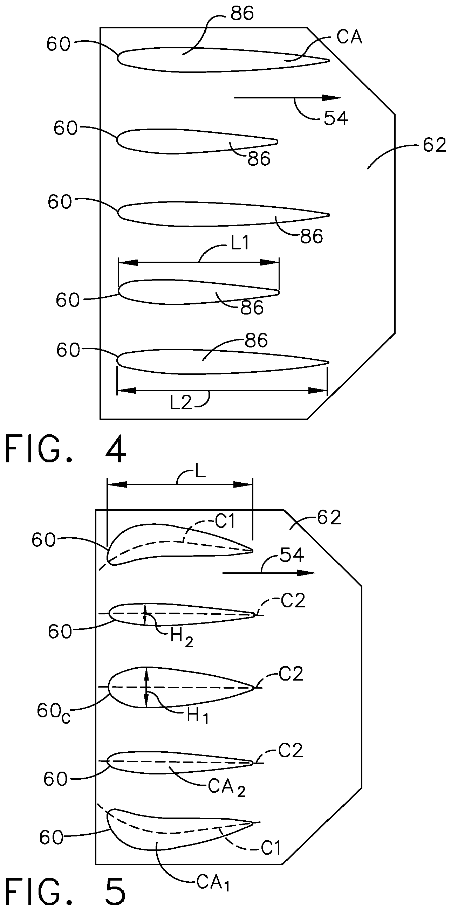

FIG. 4 is a schematic illustration of an unwrapped view about the centerline 12 of the inner frame wall 62 such that the orientation and placement of all struts 60 are visible. By way of non-limiting example the struts 60 are illustrated with symmetrical airfoil cross-sectional areas (CA). According to another aspect of the disclosure described herein, the struts 60 can have differing chord lengths (L1, L2). By way of non-limiting example, the struts 60 can be oriented such that struts 60 with smaller chord lengths (L1) are located between struts 60 with longer chord lengths (L2). It should be understood that while illustrated as every other strut having different chord lengths (L1, L2), only one strut 60 need have a different chord length (L1) with respect to the other strut 60 chord lengths (L2).

FIG. 5 is another unwrapped view of the inner frame wall 62 according to yet another aspect of the disclosure described herein. By way of non-limiting example the struts 60 are illustrated with substantially similar chord lengths (L). The struts 60 have differing cambers (C1) such that at least two of the illustrated struts have camber (C1) and different airfoil cross-sectional areas (CA1) with respect to the axial direction and three have symmetrical airfoil cross-sectional areas (CA2), or little to no camber (C2). It is also contemplated that at least one strut 60c has an airfoil height (H1) that is larger than the other strut 60 heights (H2). By way of non-limiting example, the at least one strut 60c can be centrally located with respect to the other struts. It should be understood that only one strut 60 need have a different camber (C1) with respect to the other strut 60 cambers (C2).

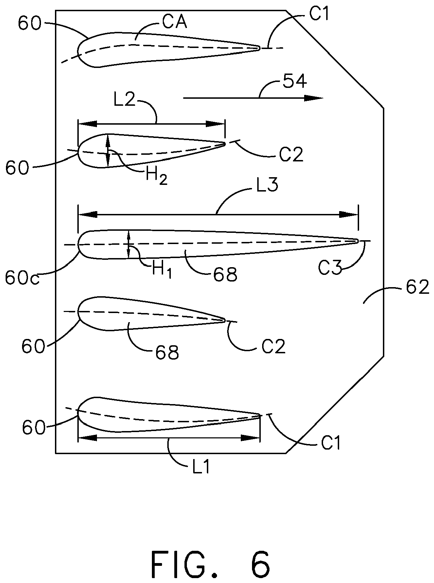

FIG. 6 is another unwrapped view of the inner frame wall 62 according to yet another aspect of the disclosure described herein. The struts 60 are illustrated with differing chord lengths (L1, L2, L3) and differing camber (C1, C2, C3). It is further contemplated that the centrally located strut 60c has a different airfoil height (H1) with respect to the surrounding struts 60, by way of non-limiting example the centrally located strut 60c has a smaller height (H1) than the other strut 60 heights (H2).

Any of the aforementioned strut 60 configurations can be combined in any way such that at least two struts have different airfoil shapes 68 and that the difference between the at least two struts is the angle θ of twist, the chord length (L), the camber (C), or any combination of the characteristics of the airfoil cross-sectional areas (CA). By way of non-limiting example, at least one strut 60 as is illustrated in FIG. 4, 5, or FIG. 6 can have a twist as is illustrated and described in FIG. 3.

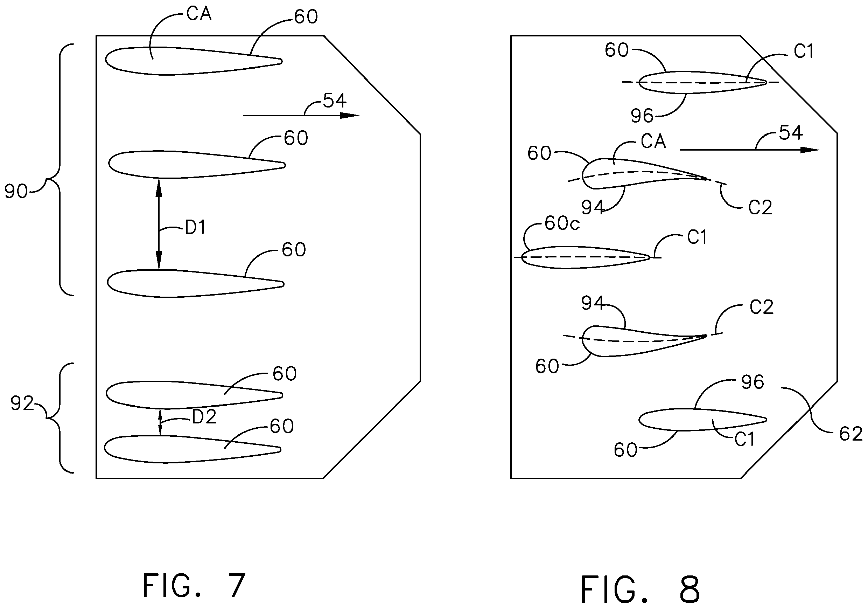

Turning to FIG. 7, it is further contemplated that location and placement of the struts around the inner frame wall 62 can be in a circumferentially variable spaced pattern. More specifically, the struts 60 need not be symmetrical or balanced with respect to each other when placed. By way of non-limiting example, a first set of struts 90 can be spaced a first circumferential distance (D1) apart and a second set of struts 92 can be spaced a second circumferential distance (D2) apart where the first circumferential distance (D1) is greater than the second circumferential distance (D2). It should be understood that any placement of struts such that a variable circumferential distance exists between two sets of struts is contemplated.

Turning to FIG. 8 in yet another aspect of the disclosure discussed herein it is further contemplated that the struts 60 can be axially staggered such that the centrally located strut 60c is upstream with respect to the airflow 54 from a third set of struts 94 which is in turn upstream from a fourth set of struts 96. It should be understood that any staggering of struts 60 with respect to each other is contemplated and that the struts 60 as shown are for illustrative purposes and not meant to be limiting.

Any of the aforementioned strut 60 placements as described in FIG. 7 and 8 can be combined in any way with the different airfoil shapes 68 described in FIGS. 3, 4, 5 and 6. By way of non-limiting example, as illustrated in FIG. 8, struts 60 can be staggered and at least two struts 60 can also have differing cambers (C1, C2).

It should be further understood that the orientation and placement of the struts is for illustrative purposes only and that each one of the aspects of the disclosure discussed herein can include more or less struts 60 placed in different locations with respect to each other and the inner frame wall 62. By way of non-limiting example it is contemplated that a centrally located strut 60c is removed, or in other words not placed in the formation of the annular frame assembly.

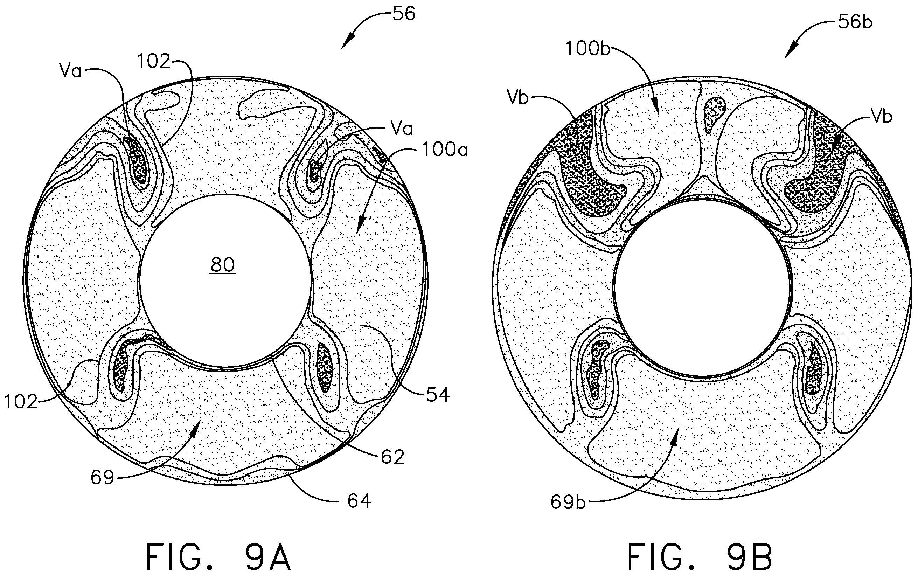

Turning to FIG. 9A, a pressure field 100a as seen along line IX-IX of FIG. 2 is illustrated. A method of controlling the pressure field 100a entering the compressor section 26 is contemplated. The method includes passing the airflow 54 through the airflow passage 66 of the compressor frame 56 and turning the airflow 54 along at least one strut 60. The method includes controlling a wake of air 102 proximate the outlet 69 by varying the chord length (L) or the camber (C) of the at least one strut 60 with respect to a second strut 60b. The method can further include twisting the at least one strut 60 with respect to the radial axis 84 or varying the airfoil height (H) of the at least one strut 60 with respect to the second strut 60b as described herein.

FIG. 9B illustrates a pressure field 100b at an outlet 69b of a compressor frame 56b where there is no variance in airfoil shape between corresponding struts 60. By way of non-limiting example there is no variance in cross-sectional area (CA), chord length (L), camber (C), or twist. The method can also include decreasing a vortices strength (Va) within the pressure field 100a as compared to a vortices strength (Vb) in the pressure field 100b compressor frame 56. The vortices strength (Va) is substantially diminished when compared to the vortices strength (Vb).

Vortices are localized areas within the airflow 54 that exhibit a significantly reduced pressure with respect to the majority of the airflow 54. A strong vortex equals a larger variation in pressure from a point in the vortex to a point outside the vortex in the airflow 54. A weak vortex has less variation. A benefit associated with reducing the vortex strength (Vb) to vortex strength (Va) is that the pressure field 100a has significantly less pressure distortion than 100b. Pressure distortion can be considered a spatial variation in the pressure of the airflow 54. Pressure distortion can have a direct impact on the performance of the compressor 28 downstream of the frame 56. Less pressure distortion directly improves engine efficiency and increases the range of operating conditions (speeds/altitudes/flight path angles/maneuvers) of the aircraft.

It should be appreciated that application of the disclosed design is not limited to turboprop engines, but is applicable to turbojet, turbofan, and turboshaft engines as well.

This written description uses examples to illustrate the disclosure as discussed herein, including the best mode, and also to enable any person skilled in the art to practice the disclosure as discussed herein, including making and using any devices or systems and performing any incorporated methods. The patentable scope of the disclosure as discussed herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbine engine with an annular frame about a centerline defining an axial direction, the annular frame comprising:
   an inner frame wall;
   an outer frame wall disposed around and radially spaced from the inner frame wall to define an annular airflow passage between the inner and outer frame walls;
   at least two struts each extending between a root at the inner frame wall and a tip at the outer frame wall to define a span-wise direction and having different airfoil shapes, the airfoil shapes differing from each other in at least one of a twist along the span-wise direction, a chord length along the axial direction, or a camber.
2. The turbine engine of clause 1, wherein the airfoil shape defines an airfoil cross-sectional area extending from a leading edge to a trailing edge in an axial direction and defining an airfoil height.
3. The turbine engine of any preceding clause, wherein the at least two struts have different airfoil heights.
4. The turbine engine of any preceding clause, wherein the twist is a degree of rotation of the airfoil cross-sectional area about a radial axis extending through the strut in the span-wise direction.
5. The turbine engine of any preceding clause, wherein the at least two struts are symmetrically spaced circumferentially about the annular airflow passage.
6. The turbine engine of any preceding clause, wherein the at least two struts are variably spaced circumferentially about the annular airflow passage.
7. The turbine engine of any preceding clause, wherein at least one of the at least two struts has a symmetrical airfoil cross-sectional area.
8. The turbine engine of any preceding clause, wherein the at least two struts are staggered in the axial direction.
9. The turbine engine of any preceding clause, wherein the at least two struts are three or more struts.
10. The turbine engine of any preceding clause, wherein the three or more struts vary in chord length or camber with respect to each other.
11. The turbine engine of any preceding clause, wherein the three or more struts vary in chord length and camber with respect to each other.
12. The turbine engine of any preceding clause, wherein the annular frame is a compressor frame.
13. A turbine engine with an annular frame about a centerline defining an axial direction comprising:
   an inner frame wall;
   an outer frame wall disposed around and radially spaced from the inner frame wall to define an annular airflow passage in an axial direction between the inner and outer frame walls; and
   at least two struts each extending between a root at the inner frame wall and a tip at the outer frame wall to define a span-wise direction and having airfoil shapes, the at least two struts arranged in at least one of an axially staggered pattern or a circumferentially variably spaced pattern.
14. The turbine engine of any preceding clause, where the at least two struts have different airfoil shapes, the airfoil shapes differing from each other in at least one of a twist along the span-wise direction, a chord length along the axial direction, or a camber.
15. The turbine engine of any preceding clause, wherein the airfoil shape defines an airfoil cross-sectional area extending from a leading edge to a trailing edge in an axial direction and defining an airfoil height.
16. The turbine engine of any preceding clause, wherein the twist is a degree of rotation of the airfoil cross-sectional area about a radial axis extending through the strut in the span-wise direction.
17. The turbine engine of any preceding clause, wherein the at least two struts have different airfoil heights.
18. The turbine engine of any preceding clause, wherein the at least two struts are symmetrically spaced circumferentially about the annular airflow passage.
19. The turbine engine of any preceding clause, wherein the at least two struts are variably spaced circumferentially about the annular airflow passage.
20. The turbine engine of any preceding clause, wherein at least one of the at least two struts has a symmetrical airfoil cross-sectional area.
21. The turbine engine of any preceding clause, wherein the at least two struts are three or more struts.
22. The turbine engine of any preceding clause, wherein the three or more struts vary in chord length or camber with respect to each other.
23. The turbine engine of any preceding clause, wherein the annular frame is a compressor frame.
24. A method of controlling a pressure field entering a compressor section of a turbine engine, the method comprising:
   passing air through an annular frame extending from an inlet to an outlet and defining an airflow passage;
   turning the air along at least one strut located within the airflow passage and having an airfoil shape; and
   controlling a wake of air proximate the outlet by at least one of the following:
      varying a chord length of the at least one strut with respect to a second strut, or
      varying a camber of the at least one strut with respect to a second strut.
25. The method of any preceding clause, wherein the controlling further includes twisting the at least one strut with respect to a radial axis extending in a span-wise direction from a root along an inner frame wall to a tip along an outer frame wall of the annular frame.
26. The method of any preceding clause, wherein the controlling further includes varying an airfoil height of the at least one strut with respect to a second strut.
27. The method of any preceding clause, further including decreasing a vortices strength within the pressure field.

## Claims

1. A turbine engine (10) with an annular frame (56) about a centerline defining an axial direction, the annular frame (56) comprising:
an inner frame wall (62);
an outer frame wall (64) disposed around and radially spaced from the inner frame wall (62) to define an annular airflow passage (66) between the inner and outer frame walls (64);
at least two struts (60, 60a, 60b, 60c, 90, 92, 94, 96) each extending between a root (70) at the inner frame wall (62) and a tip (72) at the outer frame wall (64) to define a span-wise direction and having different airfoil shapes (68), the airfoil shapes (68) differing from each other in at least one of a twist along the span-wise direction, a chord length (L) along the axial direction, or a camber (C).

2. The turbine engine (10) of claim 1, wherein the airfoil shape (68) defines an airfoil cross-sectional area (CA) extending from a leading edge (74) to a trailing edge (76) in an axial direction and defining an airfoil height (H).

3. The turbine engine (10) of claim 2, wherein the at least two struts (60, 60a, 60b, 60c, 90, 92, 94, 96) have different airfoil heights (H).

4. The turbine engine (10) of either of claim 2 or 3, wherein the twist is a degree of rotation (θ) of the airfoil cross-sectional area (CA) about a radial axis (84) extending through the strut (60, 60a, 60b, 60c, 90, 92, 94, 96) in the span-wise direction.

5. The turbine engine (10) of any preceding claim, wherein the at least two struts (60, 60a, 60b, 60c, 90, 92, 94, 96) are symmetrically spaced circumferentially about the annular airflow passage (66).

6. The turbine engine (10) of any preceding claim, wherein the at least two struts (60, 60a, 60b, 60c, 90, 92, 94, 96) are variably spaced circumferentially about the annular airflow passage (66).

7. The turbine engine (10) of any preceding claim, wherein at least one of the at least two struts (60, 60a, 60b, 60c, 90, 92, 94, 96) has a symmetrical airfoil cross-sectional area (CA).

8. The turbine engine (10) of any preceding claim, wherein the at least two struts (60, 60a, 60b, 60c, 90, 92, 94, 96) are staggered in the axial direction.

9. The turbine engine (10) of any preceding claim, wherein the at least two struts (60, 60a, 60b, 60c, 90, 92, 94, 96) are three or more struts (60, 60a, 60b, 60c, 90, 92, 94, 96).

10. The turbine engine (10) of claim 9, wherein the three or more struts (60, 60a, 60b, 60c, 90, 92, 94, 96) vary in chord length (L) and camber (C) with respect to each other.

11. A method of controlling a pressure field entering a compressor section of a turbine engine, the method comprising:
passing air through an annular frame extending from an inlet to an outlet and defining an airflow passage;
turning the air along at least one strut located within the airflow passage and having an airfoil shape; and
controlling a wake of air proximate the outlet by at least one of the following:
varying a chord length of the at least one strut with respect to a second strut, or
varying a camber of the at least one strut with respect to a second strut.

12. The method of claim 11, wherein the controlling further includes twisting the at least one strut with respect to a radial axis extending in a span-wise direction from a root along an inner frame wall to a tip along an outer frame wall of the annular frame.

13. The method of either of claim 11 or 12, wherein the controlling further includes varying an airfoil height of the at least one strut with respect to a second strut.

14. The method of any of claims 11 to 13, further including decreasing a vortices strength within the pressure field.
